# EUROPEAN PATENT APPLICATION

(11) **EP 4 464 948 A1**
(43) Date of publication of application: **20.11.2024**
(21) Application number: 23740258.1
(22) Date of filing: 11.01.2023
(51) Int. Cl.: F24F 11/56, H04B 3/54

(54) **RELAY DEVICE, AIR CONDITIONING-RELATED SYSTEM, AND COMMUNICATION METHOD**

(30) Priority: 11.01.2022 JP 2022002387
(71) Applicant: DAIKIN INDUSTRIES, LTD., Osaka-shi, Osaka 530-0001 (JP)
(72) Inventor: URATA, Kensuke, Osaka-shi, Osaka 530-0001 (JP); HIGASHIYAMA, Shin, Osaka-shi, Osaka 530-0001 (JP); HOTTA, Kosuke, Osaka-shi, Osaka 530-0001 (JP); MIURA, Takafusa, Osaka-shi, Osaka 530-0001 (JP); TOK, Chang Wenn, Osaka-shi, Osaka 530-0001 (JP); KODERA, Keita, Osaka-shi, Osaka 530-0001 (JP); YAMAMOTO, Ryosuke, Osaka-shi, Osaka 530-0001 (JP); KOYAMA, Yohei, Osaka-shi, Osaka 530-0001 (JP); ISHIZEKI, Shinichi, Osaka-shi, Osaka 530-0001 (JP)
(74) Representative: Goddar, Heinz J.
(86) International application number: PCT/JP2023/000367
(87) International publication number: WO 2023/136249

(57) **Abstract**

To provide a relay device for air-conditioning related apparatuses, an air-conditioning related system, and a communication method, with which it is possible to expect that deterioration in communication quality is suppressed.

Under a communication method according to a present embodiment, a plurality of air-conditioning related apparatuses coupled to transmission lines perform multi-hopping communication via the transmission lines, and a relay device at least provided between two of the air-conditioning related apparatuses relays the multi-hopping communication. Furthermore, the air-conditioning related apparatuses and the relay device may receive a signal that another apparatus has transmitted via the transmission lines, and transmit the signal to the transmission lines when the received signal satisfies a predetermined condition. Furthermore, the transmission lines may each include at least three lines that are a power source line, a shared line, and a signal line, and the air-conditioning related apparatuses and the relay device may perform communication in conformance with a communication standard for power line communication via the signal line.

## Description

### Technical Field

The present disclosure relates to a communication method for air-conditioning related apparatuses, an air-conditioning related system in which the communication method is adopted, and a relay device used for the communication method.

### Background Art

In a large-scale air-conditioning related system, for example, a plurality of indoor units are coupled to one outdoor unit via transmission lines, and a plurality of outdoor units are further coupled to each other via transmission lines to construct a network for communication. As pieces of information of various types are transmitted and received among a plurality of air-conditioning related apparatuses including the outdoor units and the indoor units via the transmission lines, centralized control, cooperative operation, or the like for the plurality of air-conditioning related apparatuses is realized.

PTL 1 has proposed a system of an air conditioner in which a plurality of air-conditioning units are coupled in a daisy chain manner using a switching hub built into an outdoor unit. In this system, a gateway coupled to the switching hub separates data transmission between a centralized transmission line and internal-and-external transmission lines.

### Citation List

### Patent Literature

PTL 1: Japanese Unexamined Patent Application Publication No. 2008-20092

### Summary of Invention

### Technical Problem

One concern in a large-scale air-conditioning related system is that there is a long distance between air-conditioning related apparatuses, which leads to a signal attenuated in a transmission line coupling the air-conditioning related apparatuses and results in deterioration in communication quality.

An object of the present disclosure is to provide a relay device for air-conditioning related apparatuses, an air-conditioning related system, and a communication method, with which it is possible to expect that deterioration in communication quality is suppressed.

### Solution to Problem

A relay device according to an embodiment is provided between a first air-conditioning related apparatus and a second air-conditioning related apparatus that perform multi-hopping communication via a transmission line, and relays the multi-hopping communication.

The relay device according to an embodiment includes: a first coupling terminal coupled to a transmission line being coupled to the first air-conditioning related apparatus; and a second coupling terminal coupled to a transmission line being coupled to the second air-conditioning related apparatus, in which the first coupling terminal and the second coupling terminal are electrically connected.

The relay device according to an embodiment includes a coupling terminal coupled to both a transmission line being coupled to the first air-conditioning related apparatus, and a transmission line being coupled to the second air-conditioning related apparatus.

The relay device according to an embodiment includes an electric power supply unit that supplies, based on electric power supplied via the transmission line, electric power to a communication unit that performs processing related to multi-hopping communication.

The relay device according to an embodiment includes an electric power supply unit that supplies, based on electric power supplied from a power source outside the relay device via an electric power supply line, electric power to a communication unit that performs processing related to multi-hopping communication.

The relay device according to the present embodiment includes: a first communication unit that performs multi-hopping communication via the transmission line; and a second communication unit that performs communication via the transmission line at a lower frequency than a frequency at which the first communication unit performs communication.

In the relay device according to an embodiment, the second communication unit performs communication for acquiring, from another apparatus, identification information necessary for the multi-hopping communication that the first communication unit performs.

An air-conditioning related system according to an embodiment includes: a first air-conditioning related apparatus and a second air-conditioning related apparatus that perform multi-hopping communication via a transmission line; and a relay device coupled to the transmission line, which is provided between the first air-conditioning related apparatus and the second air-conditioning related apparatus, and which relays the multi-hopping communication.

A communication method according to an embodiment includes: performing multi-hopping communication via a transmission line by a first air-conditioning related apparatus and a second air-conditioning related apparatus coupled to the transmission line; and relaying the multi-hopping communication by a relay device coupled to the transmission line, which is provided between the first air-conditioning related apparatus and the second air-conditioning related apparatus.

Under the communication method according to an embodiment, the first air-conditioning related apparatus, the second air-conditioning related apparatus, and the relay device receive a signal that another apparatus has transmitted via the transmission line, and transmit the signal to the transmission line when the received signal satisfies a predetermined condition.

Under the communication method according to an embodiment, the transmission line includes at least two signal lines, and the first air-conditioning related apparatus, the second air-conditioning related apparatus, and the relay device perform communication in conformance with a communication standard for power line communication via the signal lines.

Under the communication method according to an embodiment, the transmission line includes at least three lines that are a power source line, a shared line, and a signal line, and the first air-conditioning related apparatus, the second air-conditioning related apparatus, and the relay device perform communication in conformance with a communication standard for power line communication via the signal lines.

Under the communication method according to an embodiment, a length of a transmission line coupling the first air-conditioning related apparatus and the relay device and a length of a transmission line coupling the second air-conditioning related apparatus and the relay device are each 350 meters or shorter.

Under the communication method according to an embodiment, the length of the transmission line coupling the first air-conditioning related apparatus and the relay device and the length of the transmission line coupling the second air-conditioning related apparatus and the relay device are each 200 meters or shorter.

According to an embodiment, it is possible to expect that deterioration in communication quality is suppressed in an air-conditioning related apparatus.

### Brief Description of Drawings

[Fig. 1] Fig. 1 is a schematic diagram illustrating a configuration of an air-conditioning related system according to a present embodiment.
[Fig. 2] Fig. 2 is a block diagram illustrating a configuration of an outdoor unit according to the present embodiment.
[Fig. 3] Fig. 3 is a schematic diagram for explaining a multi-hopping function.
[Fig. 4] Fig. 4 is a block diagram illustrating a configuration of an indoor unit according to the present embodiment.
[Fig. 5] Fig. 5 is a block diagram illustrating a configuration of a centralized management device according to the present embodiment.
[Fig. 6] Fig. 6 is a block diagram illustrating a configuration of a relay device according to the present embodiment.
[Fig. 7] Fig. 7 is a schematic diagram for explaining a coupling configuration of air-conditioning related apparatuses.
[Fig. 8] Fig. 8 is a schematic diagram for explaining an upper limit for a transmission distance.
[Fig. 9] Fig. 9 is a schematic diagram for explaining extension of a communication distance using a relay device.
[Fig. 10] Fig. 10 is a schematic diagram for explaining an example of disposition of relay devices.
[Fig. 11] Fig. 11 is a schematic diagram for explaining a coupling configuration of air-conditioning related apparatuses according to a modification example.
[Fig. 12] Fig. 12 is a block diagram illustrating another configuration of a relay device.
[Fig. 13] Fig. 13 is a schematic diagram for explaining an example of supplying electric power related to a relay device.
[Fig. 14] Fig. 14 is a schematic diagram for explaining another example of supplying electric power related to a relay device.
[Fig. 15] Fig. 15 is a block diagram illustrating another configuration of a relay device.

### Description of Embodiments

Specific examples of an air-conditioning related system according to a present embodiment will be described below with reference to the drawings. Note that the present technology is not limited to the examples, but is indicated by the scope of the claims, and is intended to include all modifications within the meaning and scope equivalent to the scope of the claims.

### <System Configuration>

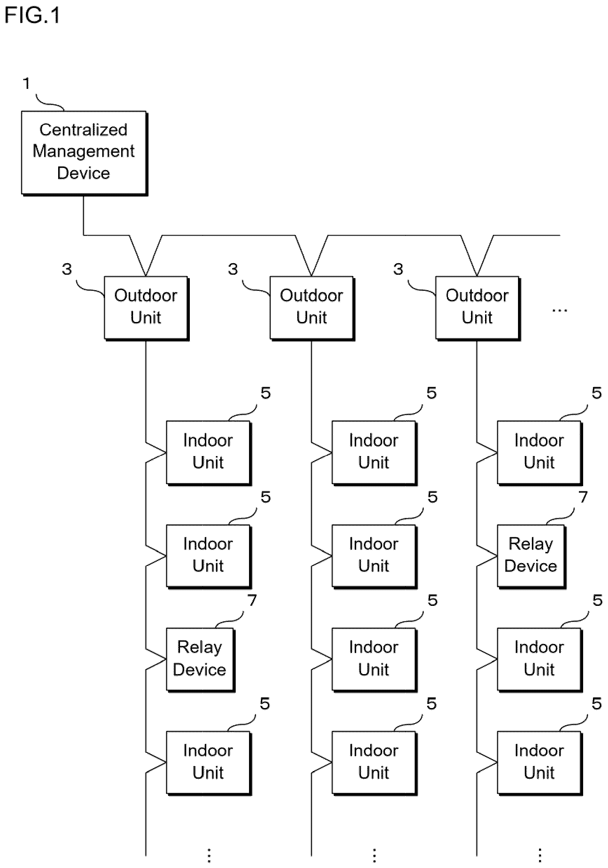

Fig. 1 is a schematic diagram illustrating a configuration of the air-conditioning related system according to the present embodiment. The air-conditioning related system according to the present embodiment is a system in which a plurality of air-conditioning related apparatuses are coupled via transmission lines (communication lines and communication cables), and the plurality of air-conditioning related apparatuses communicate with each other via the transmission lines. The air-conditioning related apparatuses may include, for example, apparatuses such as a centralized management device 1, an outdoor unit 3, an indoor unit 5, and a relay device 7. However, the air-conditioning related apparatuses are not limited to those described above and may include various types of apparatuses related to air conditioning including, for example, a ventilation device, a remote control device (remote controller), a communication device, or a control device.

In the illustrated air-conditioning related system, one centralized management device 1 and a plurality of outdoor units 3 are coupled to each other via the transmission lines. In the air-conditioning related system according to the present embodiment, a plurality of air-conditioning related apparatuses are coupled in a daisy chain manner (a chain manner or a train manner). That is, a first outdoor unit 3 is coupled to the centralized management device 1 via a first transmission line, a second outdoor unit 3 is coupled to the first outdoor unit 3 via a second transmission line, and a third outdoor unit 3 is coupled to the second outdoor unit 3 via a third transmission line. However, the plurality of transmission lines coupling the one centralized management device 1 and the plurality of outdoor units 3 are electrically connected. Therefore, if attenuation of a signal does not occur on the transmission lines, for example, all the outdoor units 3 coupled in a daisy chain manner are able to receive a signal that the centralized management device 1 transmits, and, when one of the outdoor units 3 has transmitted a signal, the centralized management device 1 and all the other outdoor units 3 are able to receive the signal.

Furthermore, in the illustrated air-conditioning related system, a plurality of indoor units 5 are coupled to each outdoor unit 3 via the transmission lines in a daisy chain manner. That is, a first indoor unit 5 is coupled to one outdoor unit 3 via a first transmission line, and a second indoor unit 5 is coupled to the first indoor unit 5 via a second transmission line. The plurality of transmission lines coupling the outdoor unit 3 and the plurality of indoor units 5 are electrically connected, and, when one of the apparatuses transmits a signal, all the other apparatuses coupled in a daisy chain manner are able to receive the signal.

Each outdoor unit 3 is coupled to the transmission line for communicating with the centralized management device 1 and another outdoor unit 3 and the transmission line for communicating with the indoor unit 5. In the present embodiment, the two transmission lines are electrically connected inside the outdoor unit 3. Therefore, for example, the centralized management device 1 is able to communicate with the indoor units 5 via the outdoor unit 3. Furthermore, for example, the indoor unit 5 coupled to the first outdoor unit 3 is able to communicate with the indoor unit 5 coupled to the second outdoor unit 3 via the first outdoor unit 3 and the second outdoor unit 3. However, in the outdoor unit 3, the transmission line for communicating with the centralized management device 1 and another outdoor unit 3 and the transmission line for communicating with the indoor unit 5 may be electrically cut off.

Furthermore, in the air-conditioning related system according to the present embodiment, it is possible to include a relay device 7 in a plurality of air-conditioning related apparatuses coupled in a daisy chain manner. When there is a long distance between two air-conditioning related apparatuses that should be directly coupled to each other via a transmission line, and a length of the transmission line exceeds a predetermined length, for example, a relay device 7 is provided between the two air-conditioning related apparatuses. In the illustrated example, the air-conditioning related system uses two relay devices 7, and each of the relay devices 7 is provided between two indoor units 5. That is, the relay device 7 is coupled to the first indoor unit 5 via the first transmission line, and the second indoor unit 5 is coupled to the relay device 7 via the second transmission line.

Note that a relay device 7 may be provided at any position in the air-conditioning related system. For example, a relay device 7 may be provided between the centralized management device 1 and an outdoor unit 3, a relay device 7 may be provided between two outdoor units 3, or a relay device 7 may be provided between an outdoor unit 3 and an indoor unit 5. Furthermore, a plurality of relay devices 7 may be provided between two air-conditioning related apparatuses.

### <Apparatus Configurations>

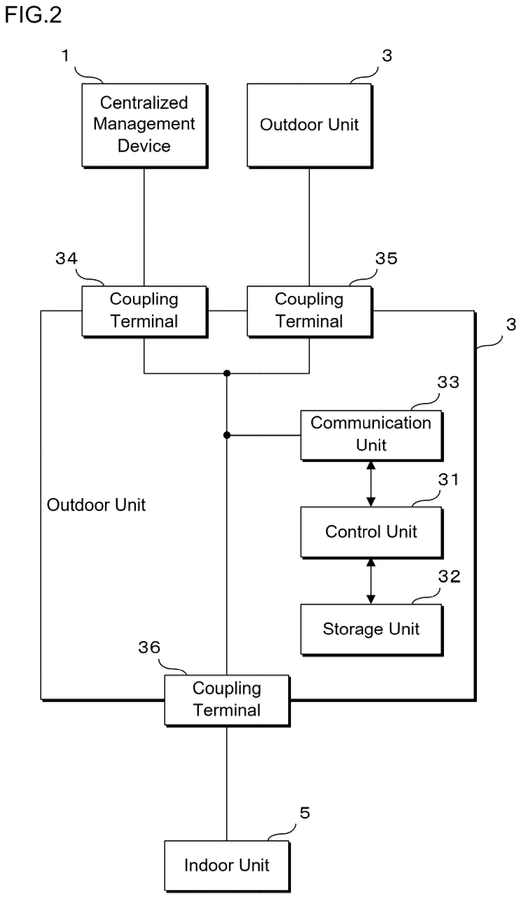

Fig. 2 is a block diagram illustrating a configuration of the outdoor unit 3 according to the present embodiment. However, in the illustrated figure, functional units related to communication that the outdoor unit 3 performs are extracted. The outdoor unit 3 according to the present embodiment includes a control unit 31, a storage unit 32, a communication unit 33, three coupling terminals 34 to 36, and the like. The control unit 31 includes an arithmetic processing device such as a central processing unit (CPU) or a micro-processing unit (MPU). The control unit 31 is able to read and execute a program stored in the storage unit 32 to perform various types of processing. In the present embodiment, the control unit 31 performs various types of control processing including control of operation of the components in the outdoor unit 3 and control of communication with the centralized management device 1, another outdoor unit 3, an indoor unit 5, and the like.

The storage unit 32 includes a non-volatile memory element such as a flash memory or an electrically erasable programmable read only memory (EEPROM), for example. The storage unit 32 stores various types of programs that the control unit 31 executes and various types of data necessary for control processing that the control unit 31 executes.

The communication unit 33 includes, for example, a transceiver integrated circuit (IC). The communication unit 33 communicates with the centralized management device 1, the other outdoor unit 3, and the indoor unit 5 via the transmission lines coupled to the plurality of coupling terminals 34 to 36 that the outdoor unit 3 includes. In the present embodiment, the communication unit 33 modulates data to be transmitted and received under an orthogonal frequency division multiplexing (OFDM) method. Thus, the communication unit 33 utilizes, for example, a frequency band ranging from 2 to 28 MHz to perform transmission in a multi-carrier manner. The communication unit 33 modulates transmission data provided from the control unit 31 to acquire a signal and outputs the signal to the transmission lines to transmit data, and acquires a signal on the transmission lines, demodulates the signal to acquire data, and provides the data to the control unit 31 as reception data.

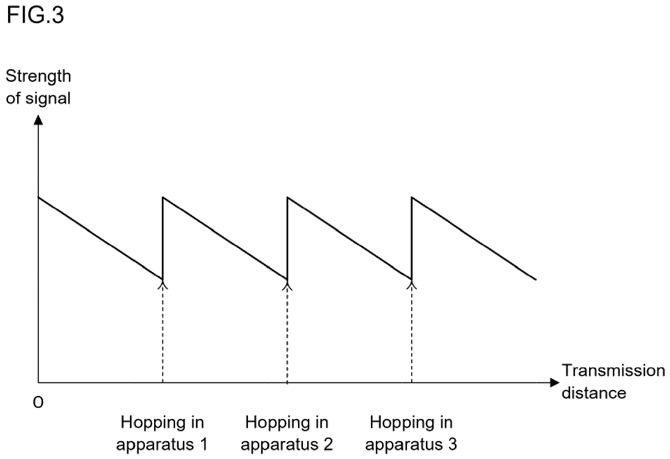

Furthermore, the communication unit 33 according to the present embodiment has a multi-hopping function. The multi-hopping function is a function that allows an apparatus that has received, via a transmission line, a signal that another apparatus has transmitted to output the received signal to the transmission line. Fig. 3 is a schematic diagram for explaining the multi-hopping function and is a graph in which a horizontal axis represents a transmission distance and a vertical axis represents strength of a signal. The strength of a signal transmitted from a certain communication device to a transmission line attenuates as a distance (a transmission distance) over which the signal is transmitted through the transmission line increases, when a position of the communication device that is a transmission source is set to a transmission distance of 0. When an apparatus 1 that has received this signal transmits (hops) an identical signal to the received signal to a transmission line, it is possible to increase signal strength of this signal. When an apparatus 2 and an apparatus 3, which are coupled to the transmission line, sequentially perform processing of transmitting the received signal to the transmission line, it is possible to extend a transmission distance for the signal.

The three coupling terminals 34 to 36 each include, for example, an electronic component such as a connector or a socket to which a transmission line for communication is coupled in an attachable and detachable manner. In the outdoor unit 3 according to the present embodiment, the three coupling terminals 34 to 36 are electrically connected via, for example, a wiring pattern on a circuit board, and are electrically coupled to the communication unit 33. Therefore, a signal inputted from one of the coupling terminals 34 to 36 is outputted from other ones of the coupling terminals 34 to 36, and is inputted to the communication unit 33. Furthermore, a signal that the communication unit 33 outputs is outputted from the coupling terminals 34 to 36. Note that, although, in the present embodiment, the three coupling terminals 34 to 36 are directly electrically connected via the wiring pattern or the like, a filter circuit or the like may be provided between the coupling terminals 34 to 36, for example. A number of coupling terminals that the outdoor unit 3 includes may be two or less or four or more.

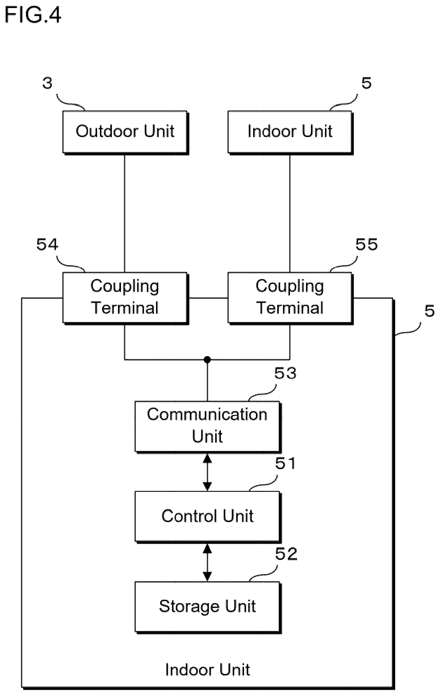

Fig. 4 is a block diagram illustrating a configuration of the indoor unit 5 according to the present embodiment. However, in the illustrated figure, functional units related to communication that the indoor unit 5 performs are extracted. The indoor unit 5 according to the present embodiment includes a control unit 51, a storage unit 52, a communication unit 53, two coupling terminals 54 and 55, and the like. The control unit 51 includes an arithmetic processing device such as a CPU or an MPU. In the present embodiment, the control unit 51 performs various types of control processing including control of operation of the components in the indoor unit 5 and control of communication with the centralized management device 1, an outdoor unit 3, another indoor unit 5, and the like. The storage unit 52 includes a non-volatile memory element such as a flash memory or an EEPROM, for example. The storage unit 52 stores various types of programs that the control unit 51 executes and various types of data necessary for control processing that the control unit 51 executes.

The communication unit 53 includes, for example, a transceiver IC. The communication unit 53 has an identical function to the function of the communication unit 33 in the outdoor unit 3, and an IC that is identical or similar in type to the IC used in the communication unit 33 in the outdoor unit 3 may be used. The communication unit 53 has a modulation function conforming to the OFDM method and a multi-hopping function and performs communication with the centralized management device 1, the outdoor unit 3, the other indoor unit 5, relay devices 7, and the like via the transmission lines coupled to the coupling terminals 54 and 55 that the indoor unit 5 includes. The communication unit 53 modulates transmission data provided from the control unit 51 to acquire a signal and outputs the signal to the transmission lines to transmit data, and acquires a signal on the transmission lines, demodulates the signal to acquire data, and provides the data to the control unit 51 as reception data.

The two coupling terminals 54 and 55 each include, for example, an electronic component such as a connector or a socket to which a transmission line for communication is coupled in an attachable and detachable manner. The coupling terminals 54 and 55 are electrically connected via, for example, a wiring pattern on a circuit board, and are electrically coupled to the communication unit 53. A number of coupling terminals that the indoor unit 5 includes may be one, three, or more.

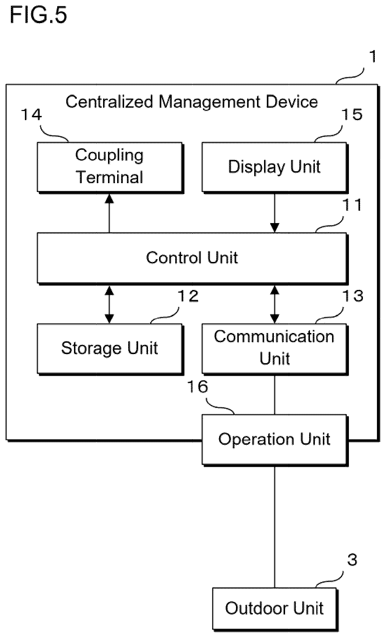

Fig. 5 is a block diagram illustrating a configuration of the centralized management device 1 according to the present embodiment. The centralized management device 1 according to the present embodiment includes a control unit 11, a storage unit 12, a communication unit 13, a display unit 14, an operation unit 15, a coupling terminal 16, and the like. The control unit 11 includes an arithmetic processing device such as a CPU or an MPU. In the present embodiment, the control unit 11 performs various types of control processing including control of operation of the components in the centralized management device 1 and control of communication with the outdoor units 3, the indoor units 5, and the like. The storage unit 12 includes a non-volatile memory element such as a flash memory or an EEPROM, or a magnetic storage device such as a hard disk, for example. The storage unit 12 stores various types of programs that the control unit 11 executes and various types of data necessary for control processing that the control unit 11 executes.

The communication unit 13 includes, for example, a transceiver IC. The communication unit 13 has an identical function to the function of the communication unit 33 in the outdoor unit 3 and to the function of the communication unit 53 in the indoor unit 5, and an IC that is identical or similar in type to the IC used in the communication unit 33 in the outdoor unit 3 and the communication unit 53 in the indoor unit 5 may be used. The communication unit 13 has a modulation function conforming to the OFDM method and a multi-hopping function and performs communication with the outdoor units 3, the indoor units 5, the relay devices 7, and the like via the transmission lines coupled to the coupling terminal 16 that the centralized management device 1 includes. The communication unit 13 modulates transmission data provided from the control unit 11 to acquire a signal and outputs the signal to the transmission lines to transmit data, and acquires a signal on the transmission lines, demodulates the signal to acquire data, and provides the data to the control unit 11 as reception data.

The display unit 14 includes a liquid crystal display or the like and displays various types of images, characters, and the like under control of the control unit 11. The operation unit 15 receives an operation of a user, and notifies the control unit 11 of the received operation. For example, the operation unit 15 receives an operation of the user through an input device such as a mechanical button or a touch panel provided on a surface of the display unit 14. Furthermore, for example, the operation unit 15 may include input devices including a mouse and a keyboard, and the input devices may be detachable from the centralized management device 1. The coupling terminal 16 includes, for example, an electronic component such as a connector or a socket to which a transmission line for communication is coupled in an attachable and detachable manner. The coupling terminal 16 is electrically coupled to the communication unit 13 via, for example, a wiring pattern on a circuit board. A number of coupling terminals that the centralized management device 1 includes may be two or more.

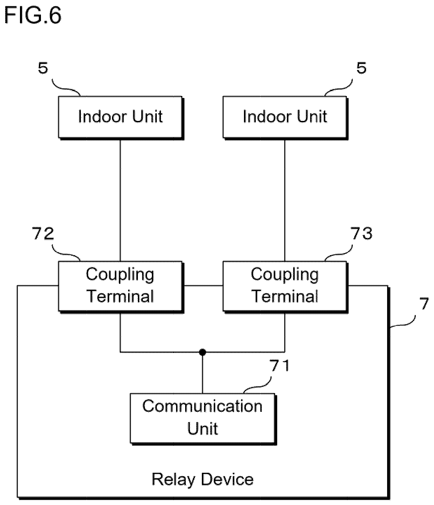

Fig. 6 is a block diagram illustrating a configuration of the relay device 7 according to the present embodiment. The relay device 7 according to the present embodiment includes a communication unit 71, two coupling terminals 72 and 73, and the like. The communication unit 71 includes, for example, a transceiver IC. The communication unit 71 has an identical function to the function of the communication unit 33 in the outdoor unit 3, the function of the communication unit 53 in the indoor unit 5, and the function of the communication unit 13 in the centralized management device 1, and an IC that is identical or similar in type to the IC used in these apparatuses may be used. The communication unit 71 has a modulation function conforming to the OFDM method and a multi-hopping function and performs communication with the centralized management device 1, the outdoor units 3, the indoor units 5, and the like via the transmission lines coupled to the coupling terminals 72 and 73 that the relay device 7 includes. However, the communication unit 71 in the relay device 7 may include at least the multi-hopping function and does not necessarily include the modulation function conforming to the OFDM method.

The two coupling terminals 72 and 73 each include, for example, an electronic component such as a connector or a socket to which a transmission line for communication is coupled in an attachable and detachable manner. The coupling terminals 72 and 73 are electrically connected via, for example, a wiring pattern on a circuit board and are electrically coupled to the communication unit 71. A number of coupling terminals that the relay device 7 includes may be one, three, or more.

### <Communication Method>

In the air-conditioning related system according to the present embodiment, a plurality of air-conditioning related apparatuses including the centralized management device 1, the outdoor units 3, the indoor units 5, and the relay devices 7, for example, are coupled in a daisy chain manner via the transmission lines and perform communication in a multi-carrier manner under the OFDM modulation method. The plurality of transmission lines coupling the plurality of air-conditioning related apparatuses are electrically connected to each other, and accordingly when one of the air-conditioning related apparatuses has transmitted a signal, all the other air-conditioning related apparatuses are able to receive the signal. Each of the air-conditioning related apparatuses has the multi-hopping function that outputs an identical signal to a received signal to the transmission lines, and accordingly since the strength of the signal, which attenuates as a transmission distance from a source of the transmission increases, is increased to extend the transmission distance of the signal.

As a communication method for the OFDM modulation and multi-hopping functions, for example, there is a communication method called high definition power line communication (HD-PLC). Therefore, for example, it is possible to use a transceiver IC, which is adopted with the HD-PLC communication method, to configure the communication unit 13 in the centralized management device 1, the communication unit 33 in the outdoor unit 3, the communication unit 53 in the indoor unit 5, and the communication unit 71 in the relay device 7. Note that, although, under the HD-PLC communication method, communication is performed via a power line, each of the air-conditioning related apparatuses in the air-conditioning related system according to the present embodiment does not perform communication via a power line, but performs communication via the transmission line provided separately from the power line.

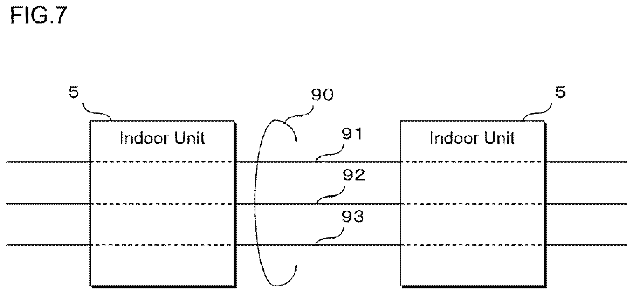

Fig. 7 is a schematic diagram for explaining a coupling configuration for the air-conditioning related apparatuses. Note that, although, in the figure, the coupling configuration is illustrated based on the indoor units 5 as example air-conditioning related apparatuses, the centralized management device 1, the outdoor units 3, and the relay devices 7 each have an identical or similar coupling configuration. In the air-conditioning related system according to the present embodiment, a transmission line 90 in which three electric wires that are a power source line 91, a signal line 92, and a shared line 93 are bundled is used to couple two of the air-conditioning related apparatuses. The power source line 91 is an electric wire for supplying electric power from a power source to each of the air-conditioning related apparatuses. The signal line 92 is an electric wire for transmitting a signal for communication performed between the air-conditioning related apparatuses. The shared line 93 is an electric wire for defining a potential serving as a reference.

A plurality of air-conditioning related apparatuses are coupled in a daisy chain manner such that a second air-conditioning related apparatus is coupled to a first air-conditioning related apparatus via a first transmission line 90, a third air-conditioning related apparatus is coupled to the second air-conditioning related apparatus via a second transmission line 90, and a fourth air-conditioning related apparatus is coupled to the third air-conditioning related apparatus via a third transmission line 90. The electric wires included in the plurality of transmission lines 90 coupled to the air-conditioning related apparatuses are electrically coupled in the air-conditioning related apparatuses. That is, the power source line 91 in the first transmission line 90 coupled to the air-conditioning related apparatus is electrically coupled to the power source line 91 in the second transmission line 90 in the air-conditioning related apparatus. The signal line 92 in the first transmission line 90 coupled to the air-conditioning related apparatus is electrically coupled to the signal line 92 in the second transmission line 90 in the air-conditioning related apparatus. The shared line 93 in the first transmission line 90 coupled to the air-conditioning related apparatus is electrically coupled to the shared line 93 in the second transmission line 90 in the air-conditioning related apparatus.

In the air-conditioning related system according to the present embodiment, each of the air-conditioning related apparatuses performs communication via the signal line 92 in the transmission line 90. However, the air-conditioning related system may be configured to perform communication via the power source line 91 through power line communication, and, in this case, the air-conditioning related apparatuses may be coupled to each other via a transmission line in which two electric wires that are the power source line 91 and the shared line 93 are bundled. Furthermore, the transmission line 90 may include three electric wires that are the power source line 91, the signal line 92, and the shared line 93, and may further include one or more other electric wires.

Furthermore, in the air-conditioning related system according to the present embodiment, each of the air-conditioning related apparatuses has the multi-hopping function, and performs processing of outputting an identical signal to a received signal to the transmission lines (hereinafter, this processing will be referred to as hopping) . Note that it is not necessary that all of the air-conditioning related apparatuses included in the air-conditioning related system perform hopping, and, for example, only the air-conditioning related apparatus, which has received a signal with a low strength, may perform hopping (however, all of the air-conditioning related apparatuses may always perform hopping). As a method of determining whether or not each of the air-conditioning related apparatuses performs hopping, it is possible to adopt one of the following several methods.

### (1) Determination by designer

For example, whether or not each of the air-conditioning related apparatuses included in the air-conditioning related system performs hopping may be set in advance. A designer, a builder, or the like of the air-conditioning related system sets whether or not each of the air-conditioning related apparatuses performs hopping in accordance with, for example, a length of the transmission line between the air-conditioning apparatuses, a surrounding noise environment, or the like. According to this setting, each of the air-conditioning related apparatuses determines whether or not to perform hopping. When the setting is provided, the designer, the builder, or the like performs transmission and reception of test signals in the air-conditioning related system, measures strength of a reception signal in each of the air-conditioning related apparatuses, a communication speed at which each of the air-conditioning related apparatuses is communicable, or the like, and determines whether or not each of the air-conditioning related apparatuses performs hopping based on a result of the measurement.

### (2) Determination by air-conditioning related system

For example, each of the air-conditioning related apparatuses in the air-conditioning related system may cooperatively transmit and receive a test signal at a predetermined timing (for example, a timing at which operation is started after the system has been installed or a periodic timing such as once a month), each of the air-conditioning related apparatuses may measure strength of a received signal, a communication speed at which communication is possible, or the like, and each of the air-conditioning related apparatuses may determine whether or not to perform hopping based on a result of the measurement.

For example, under the HD-PLC communication method, each of the air-conditioning related apparatuses measures a communication speed (PHY Rate) at which the apparatus itself is communicable, and each of the air-conditioning related apparatuses determines whether or not to perform hopping based on whether or not the communication speed exceeds a threshold value. Each of the air-conditioning related apparatuses determines to not perform hopping when the communication speed exceeds the threshold value, and determines to perform hopping when the communication speed does not exceed the threshold value.

### (3) Dynamical determination by air-conditioning related apparatus

For example, each of the air-conditioning related apparatuses may measure strength of a signal each time the signal is received and may determine whether or not to perform hopping based on whether or not the measured strength exceeds a threshold value. Each of the air-conditioning related apparatuses determines to not perform hopping when the strength of the signal exceeds the threshold value and determines to perform hopping when the strength of the signal does not exceed the threshold value. In this case, whether or not to perform hopping may be determined each time a signal is received. In this case, each of the air-conditioning related apparatuses is able to measure and compare, with a threshold value, a received signal strength indication (RSSI), a carrier to interference and noise ratio (CINR), or the like, for example. It may be sufficient that the threshold value be appropriately determined based on a configuration of the air-conditioning related system and the like.

Note that the method of determining whether or not each of the air-conditioning related apparatuses performs hopping is not limited to the three methods (1) to (3) described above, and any other method may be used.

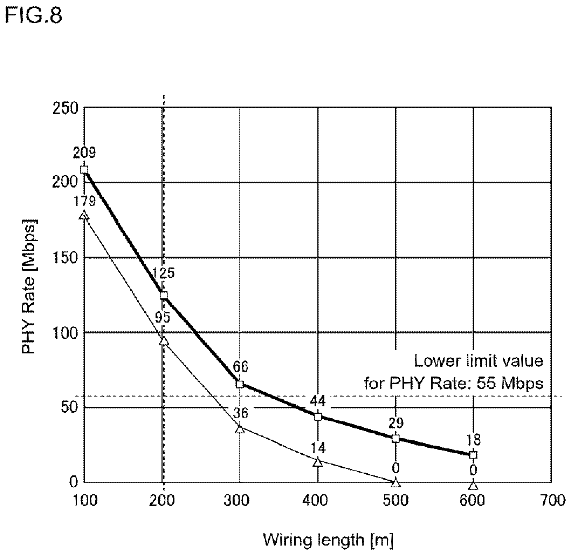

Furthermore, to prevent such a situation from occurring that the strength of a signal attenuates as a transmission distance from a source of transmission of the signal increases and it is thus impossible to maintain communication between the air-conditioning related apparatuses, an upper limit is set for the transmission distance (i.e., a length of the transmission line) in the air-conditioning related system according to the present embodiment. Fig. 8 is a schematic diagram for explaining an upper limit for the transmission distance and is a graph illustrating a result of a measured correspondence relationship between a length of a transmission line (a wiring length) and a communication speed (PHY Rate). In the graph, a horizontal axis represents a wiring length [m], a vertical axis represents a PHY Rate [Mbps], a result of measurement when the air-conditioning related apparatus is not performing air conditioning operation is indicated by a thick solid line, and a result of measurement when the air-conditioning related apparatus is performing air conditioning operation is indicated by a thin solid line.

Normal operation was first performed in an air-conditioning related system in which 200 air-conditioning related apparatuses were coupled, the air-conditioning related apparatuses were caused to perform communication, and a relationship between a communication speed (PHY Rate) and whether or not there was an abnormality in communication was measured. Although communication was performed without abnormality as long as a PHY Rate of 55 Mbps was ensured in this measurement, an abnormality that a communication packet was not received occurred at PHY Rates equal to and below 55 Mbps. Therefore, in the air-conditioning related system according to the present embodiment, the lower limit value for PHY Rate for communication is set to 55 mbps. In the graph illustrated in the figure, the lower limit value for PHY Rate is indicated by a broken line extending in the horizontal direction.

Next, communication speeds (PHY Rates), at which communication was possible when two air-conditioning related apparatuses were directly coupled via a transmission line and communication was performed, were measured while a length of the transmission line (a wiring length) was changed variously. Results of the measurements are illustrated by the polygonal lines in the graph. When communication was performed without causing the air-conditioning related apparatuses to perform air conditioning operation, such results of the measurements were acquired that the PHY Rate was equal to or faster than 55 mbps that was the lower limit value when the wiring length was equal to or shorter than 350 m (see the thick solid polygonal line). From the results of the measurements, an upper limit value for the length of the transmission line in the air-conditioning related system according to the present embodiment is "350 m" in an environment with little influence of noise or the like, for example.

When the air-conditioning related apparatuses were caused to perform air conditioning operation and were caused to perform communication, the PHY Rate deteriorated as illustrated, as results of the measurements, by the thin solid polygonal line in the graph illustrated in the figure. It is considered that a reason of the results is an influence of self-noise caused by an inverter, a switching power source, or the like that operated when the air-conditioning related apparatuses performed air conditioning operation, and an amount of deterioration is approximately 40 Mbps. In actual cases, in addition to the self-noise in the air-conditioning related apparatuses, various types of influences such as crosstalk from other transmission lines, branch attenuation due to the branched transmission lines, load attenuation due to input impedance in the air-conditioning related apparatuses, and characteristic changes due to deterioration of the transmission lines may further worsen the PHY Rate.

Therefore, in the air-conditioning related system according to the present embodiment, the upper limit for the wiring length is set to maintain a safety factor S exceeding 2.25, based on results of measurements when communication was performed without causing air conditioning operation to be performed, in consideration of deterioration in PHY Rate at approximately 40 mbps due to self-noise and deterioration due to other factors. In the graph illustrated in the figure, a PHY Rate when a wiring length is 200 m is 125 mbps, and a safety factor S = 125 Mbps / 55 Mbps ≈ 2.27. Therefore, an upper limit value for the length of the transmission line in the air-conditioning related system according to the present embodiment is determined to "200 m". However, in a system in which a higher safety factor S is required, an upper limit value for a length of a transmission line may be shorter, and, in a system in which a lower safety factor S is allowed, an upper limit value for a length of a transmission line may be longer than that when a higher safety factor is required.

Although, in the air-conditioning related system according to the present embodiment, an upper limit value for a length of the transmission line coupling the air-conditioning related apparatuses is 200 m, as described above, there may be a case where a distance between two air-conditioning related apparatuses be 200 m or longer depending on locations where the air-conditioning related apparatuses are installed. In the air-conditioning related system according to the present embodiment, when a transmission line having a length exceeding the upper limit value of 200 m is required, one or more relay devices 7 are provided between two air-conditioning related apparatuses.

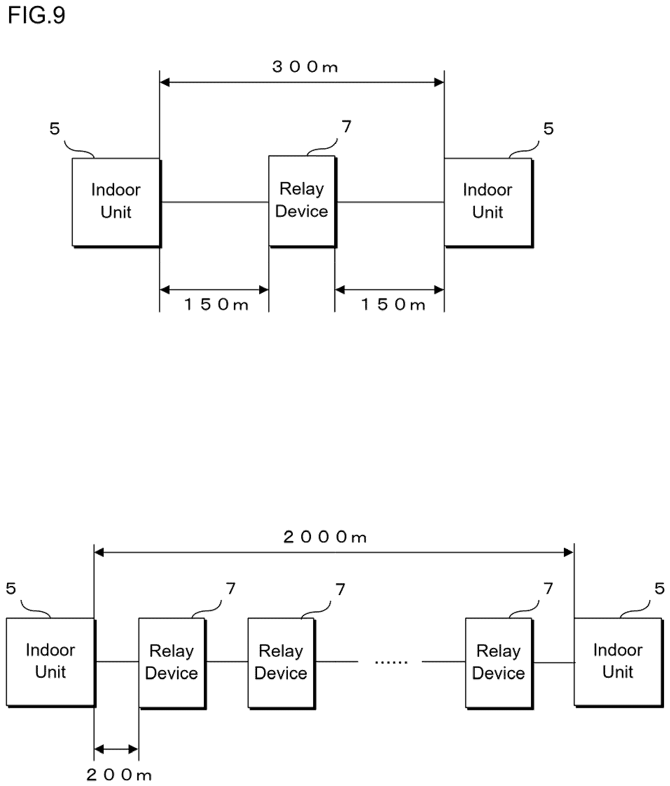

Fig. 9 is a schematic diagram for explaining extension of a communication distance using a relay device 7. An upper part in Fig. 9 illustrates a case where two indoor units 5 are installed as air-conditioning related apparatuses at a distance of 300 m. In this case, when the two indoor units 5 are directly coupled to each other using one transmission line, a length of the transmission line exceeds the upper limit value of 200 m. Therefore, it is possible that one relay device 7 is provided between the two indoor units 5, a first indoor unit 5 and the relay device 7 are coupled with a first transmission line, and the relay device 7 and a second indoor unit 5 are coupled with a second transmission line, making each of the lengths of the transmission lines 150 m.

Note that, although, in this example, the length of 300 m is equally divided into two to make the lengths of the transmission lines coupling the relay device 7 and the indoor units 5 each 150 m, the length is not necessarily equally divided into two, and may be divided into, for example, 200 m and 100 m. As long as the length of one transmission line is 200 m or shorter, the transmission line may be divided in any way.

Furthermore, a lower part in Fig. 9 illustrates a case where two indoor units 5 are installed at a distance of 2000 m. In this case, nine relay devices 7 are installed between two indoor units 5 each separated at a distance of 200 m, the devices and the units are sequentially coupled with each other each with a transmission line having a length of 200 m, and the relay devices 7 are caused to perform hopping, making the two indoor units 5 separated at a distance of 2000 m communicable with each other.

Note that, although, in the illustrated example, the nine relay devices 7 are provided between the two indoor units 5, the configuration is not limited to the example, and ten or more relay devices 7 may be provided between two indoor units 5. It is possible to determine an upper limit for a number of relay devices 7 that are allowed to be provided between two indoor units 5 in accordance with, for example, a maximum number of times of hopping under a communication method (standard).

### <Summary>

In the air-conditioning related system according to the present embodiment having the configuration described above, a plurality of air-conditioning related apparatuses including the centralized management device 1, the outdoor units 3, and the indoor units 5, which are coupled to the transmission lines, perform multi-hopping communication via the transmission lines. Thus, since, in the air-conditioning related system, it is possible to increase, for a signal that attenuates in strength as a transmission distance increases, the strength of the signal as the air-conditioning related apparatuses perform hopping, it is possible to expect that deterioration in communication quality is suppressed, and it is possible to expect that a transmission distance is extended for a signal related to communication.

Furthermore, in the air-conditioning related system according to the present embodiment, the relay device 7 at least provided between two of the air-conditioning related apparatuses relays multi-hopping communication. Thus, in the air-conditioning related system, even when a distance between air-conditioning related apparatuses that need to communicate with each other is long, for example, providing the relay device 7 between the apparatuses and allowing the relay device to relay communication allows the air-conditioning related apparatuses to communicate with each other.

Furthermore, the air-conditioning related apparatuses and the relay device 7 in the air-conditioning related system according to the present embodiment each receive a signal that another one of the apparatuses has transmitted via the transmission lines, and, when the received signal satisfies a predetermined condition, for example, when the strength of the signal does not exceed a threshold value, each transmit the received signal to the transmission lines to perform hopping (multi-hopping). Thus, in the air-conditioning related system, it is possible to increase the strength of a signal that has attenuated in strength as a transmission distance increases, it is possible to expect that deterioration in communication quality is suppressed, and it is possible to expect that a transmission distance is extended for the signal related to communication.

Furthermore, in the air-conditioning related system according to the present embodiment, it is desirable that the apparatuses including the centralized management device 1, the outdoor units 3, the indoor units 5, and the relay devices 7 be coupled in a daisy chain manner, and the length of each of the transmission lines, which couples two of the apparatuses be 350 meters or shorter. As a result of measuring a correspondence between a wiring length and a communication speed (PHY Rate), it was possible to perform communication at a PHY Rate of 55 mbps when a wiring length was 350 meters or shorter in an environment with little influence of noise or the like.

Furthermore, in the air-conditioning related system according to the present embodiment, it is preferable that the length of a transmission line coupling two apparatuses be 200 meters or shorter. By providing a condition of a wiring length of 200 meters or shorter, which is stricter than the wiring length of 350 meters or shorter described above, it is possible to expect that communication is to be performed while ensuring a sufficient safety factor S even in an environment with influence of noise or the like.

### <Disposition of Relay Device>

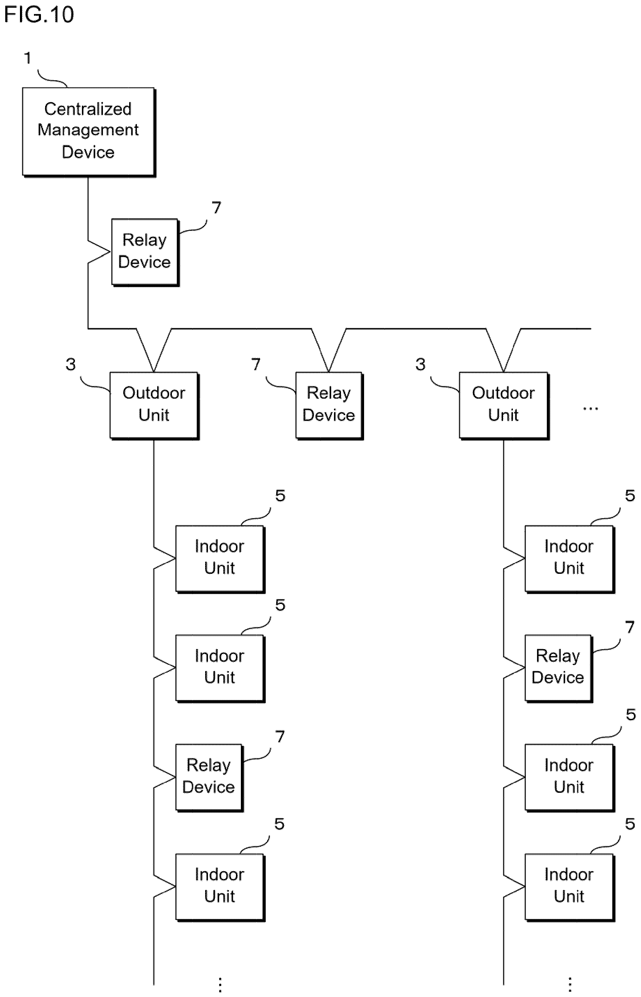

Fig. 10 is a schematic diagram for explaining an example of disposition of relay devices. In the configuration of the air-conditioning related system illustrated in Fig. 1 described above, the two relay devices 7 are used, and each of the two relay devices 7 is provided between two of the indoor units 5. On the other hand, in the configuration of the air-conditioning related system illustrated in Fig. 10, a relay device 7 is provided between the centralized management device 1 and an outdoor unit 3, and another relay device 7 is provided between two outdoor units 3. As described above, the relay device 7 according to the present embodiment is coupled at any position in the air-conditioning related system to relay communication.

Since there is a limitation in installation space, an outdoor unit 3 is often installed, for example, on a rooftop of a building. For this case, when the centralized management device 1 is installed in a basement, a first floor, or the like of the building, since a distance between the centralized management device 1 and the outdoor unit 3 is long, there is a concern of deterioration in communication quality due to an attenuated signal. Therefore, when a relay device 7 is coupled between the centralized management device 1 and the outdoor unit 3, it is possible to expect that communication quality is prevented from deteriorating.

Furthermore, for example, when a plurality of outdoor units 3 are disposed in a property having a large floor area, a distance between the outdoor units 3 increases depending on how wide an area to be air-conditioned for each of the outdoor units 3, where an air-conditioning room is disposed, or the like, and there is a concern of deterioration in communication quality due to an attenuated signal. Therefore, when a relay device 7 is coupled between two outdoor units 3, it is possible to expect that communication quality is prevented from deteriorating.

Furthermore, for example, in a multi-building property where there are a plurality of buildings such as office buildings, school buildings, hospital buildings, public office buildings, or a commercial facility, and when air conditioning management for the plurality of buildings is performed with one centralized management device 1, a distance between two of the outdoor units provided in the buildings becomes longer in accordance with a distance between two of the buildings, there is a concern of deterioration in communication quality due to an attenuated signal. Therefore, when a relay device 7 is coupled between two outdoor units 3 provided in different buildings, it is possible to expect that communication quality is prevented from deteriorating. Furthermore, in this case, it is possible to provide a plurality of relay devices 7 between two of the outdoor units 3.

Furthermore, although not illustrated in Fig. 10, there is a case where, for example, after an air-conditioning related system has been installed, such a situation is found that noise from another facility enters a communication line, and communication performance deteriorates or communication becomes impossible, and it is necessary to review wiring, for example. Similarly, for example, there may be a case where another facility is added to a building provided with an air-conditioning related system, the other facility becomes a noise source, and it is necessary to review wiring. In such a case, when a relay device 7 is disposed on a communication path through which noise from another facility enters, the relay device 7 makes it possible to restore and retransmit a signal, and it is possible to expect that an S/N ratio is improved in another air-conditioning related apparatus that receives this signal. Thus, when a relay device 7 is disposed, it is possible to expect that communication quality is prevented from deteriorating without drastically reviewing wiring.

Furthermore, for example, when a wiring length between air-conditioning related apparatuses is long, it may be necessary to adopt such a system configuration that a packet transmitted in a multi-hopping manner must always passes through a certain apparatus. In such a system configuration, when there is an abnormality occurred in the certain apparatus through which a packet must always passes, the packet is not able to reach an apparatus downstream of the certain apparatus. Therefore, when a relay device 7 is installed near the certain apparatus, as a redundant design, the relay device 7 is able to function as a relay point for multi-hopping as a substitute, when there is an abnormality in the certain apparatus, and it is possible to expect that communication is maintained in the air-conditioning related system.

Furthermore, for example, there is a case where it is necessary to cut off power for a certain apparatus when maintenance or the like is performed. When power for a certain apparatus is cut off, an apparatus that performs multi-hopping on a communication path may be lost, and communication between other apparatuses for which power is not cut off may be inhibited. Therefore, when a relay device 7 is temporarily installed near an apparatus for which power is to be cut off, the relay device 7 is able to perform multi-hopping as a substitute after the power is cut off, and it is possible to expect that communication is maintained in the air-conditioning related system.

### <Modification Examples of Coupling Configuration>

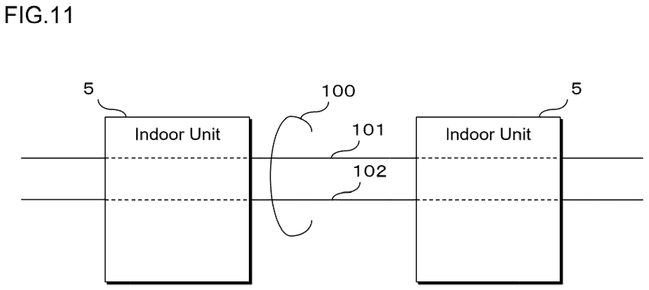

Fig. 11 is a schematic diagram for explaining a coupling configuration of air-conditioning related apparatuses according to a modification example. In the coupling configuration of the air-conditioning related apparatuses illustrated in Fig. 7 described above, for example, the two indoor units 5 are coupled via the transmission line 90, and the transmission line 90 is formed by bundling three lines that are the power source line 91, the signal line 92, and the shared line 93. On the other hand, in the coupling configuration of the air-conditioning related apparatuses according to the modification example illustrated in Fig. 11, for example, two indoor units 5 are coupled via a transmission line 100, and the transmission line 100 according to the modification example is formed by bundling two signal lines 101 and 102.

Note that, in the case of the coupling configuration of the air-conditioning related apparatuses illustrated in Fig. 7, electric power is supplied to each of the indoor units 5 via the power source line 91. In the coupling configuration of the air-conditioning related apparatuses illustrated in Fig. 11, the transmission line 100 does not include a power source line, and, therefore, although not illustrated, a power line for supplying electric power from, for example, a commercial power supply or the like is individually coupled to each of the indoor units 5.

Furthermore, in the coupling configuration of the air-conditioning related apparatuses illustrated in Fig. 11, it is possible to supply electric power via the signal lines 101 and 102 included in the transmission line 100, instead of supplying electric power to each of the indoor units 5 individually. Supplying electric power via the signal lines 101 and 102 eliminates necessity of securing a power source for each of the indoor units 5, and it is possible to expect that operability of the air-conditioning related system is improved.

Furthermore, the transmission line 100 used in the coupling configuration of the air-conditioning related apparatuses illustrated in Fig. 11 includes the two signal lines 101 and 102, which have no polarity. Therefore, it is possible to expect that wiring and coupling work of the transmission line 100 are easily performed when the air-conditioning related system is installed.

Note that, although, in this example, the coupling configuration has been described with reference to the indoor units 5 as example air-conditioning related apparatuses, the configuration is not limited to the example. For example, a coupling configuration between the centralized management device 1 and an outdoor unit 3, a coupling configuration between two outdoor units 3, a coupling configuration between an outdoor unit 3 and an indoor unit 5, a coupling configuration between the centralized management device 1 and a relay device 7, a coupling configuration between an outdoor unit 3 and a relay device 7, a coupling configuration between an indoor unit 5 and a relay device 7, and a coupling configuration between two relay devices 7 may each adopt the coupling configuration using the transmission line 100 including the two signal lines 101 and 102.

### <Advantages of Adopting HD-PLC in Air-conditioning Related system>

When the HD-PLC communication method is adopted in the air-conditioning related system, it is possible to expect that a communication band and a communication speed are improved, for example. In a system where a communication speed is low, it is difficult to increase an amount of data in a packet to be transmitted and received between apparatuses, and, for example, it is necessary to take measures for fixing data allocation for the packet and transmitting and receiving only a necessary value. Utilizing high-speed communication based on HD-PLC makes it possible, for a value to be transmitted and received between apparatuses, for example, to add, transmit, and receive tag information indicating what the value means or type information indicating what a type of the value is. Thus, for example, it is possible to improve flexibility of data that an apparatus on a transmission side transmits, to facilitate data interpretation in an apparatus on a reception side, and thus it is possible to expect that a degree of freedom in communication is improved.

Since it is possible to increase an amount of data in a packet to be transmitted and received between apparatuses, it is possible to apply a communication method under which a size of a header is large such as internet protocol (IP) communication to the air-conditioning related system. When a widely utilized communication method such as IP communication is applied, it is possible to expect that various types of communication resources are used. For example, it is possible to expect that the air-conditioning related system adopts a technology for improving reliability of communication such as transmission control protocol (TCP), an encryption technology such as transport layer security (TLS) or security architecture for internet protocol (IPsec), or the like.

As a communication speed is increased, it is possible, in the air-conditioning related system, to perform control of increasing a communication frequency in accordance with, for example, a situation of air conditioning. For example, the air-conditioning related system makes it possible to perform communication at a high frequency in defrosting control or the like, and to perform acquisition of a state and to provide an instruction for operation, and the like, at a high frequency, and, thereby, it is possible to expect that efficiency of operation, reduction in electric power consumption, shortening of a control completion time, and the like are realized.

Furthermore, since it is possible to acquire states of apparatuses at a high frequency through communication, it is possible, when an abnormality or the like occurs in the air-conditioning related system, for example, a service person or the like is able to grasp the states of the apparatuses in detail, and is able to grasp the states of a large number of the apparatuses simultaneously, and it is possible to expect that a problem is to be promptly solved.

Furthermore, when the HD-PLC communication method is adopted in the air-conditioning related system, it is possible to expect that, with the multi-hopping function, a wiring length is increased and a communication distance is extended. Thus, for example, even when a large number of outdoor units 3 and indoor units 5 are disposed in a large-scale property, a total wiring length is not limited. Furthermore, as the relay device 7 is utilized, a wiring length between two apparatuses is not limited.

Furthermore, since HD-PLC is a communication method that does not depend on a type of wiring utilized for communication, it is possible to expect that, for example, wiring of an existing air-conditioning related system in which a communication method other than HD-PLC has been adopted is utilized to implement the air-conditioning related system according to the present embodiment. Furthermore, it is also possible to utilize wiring of various types of systems different from the air-conditioning related system.

Furthermore, when the HD-PLC communication method is adopted in the air-conditioning related system, it is possible to expect that the number of apparatuses that perform communication is increased, compared with existing air-conditioning related systems. For example, although, when an air-conditioning related system is provided in a large-scale property, it is necessary for the centralized management device 1 to manage a large number of outdoor units 3 and indoor units 5, it is possible to expect that, with the multi-hopping function, communication quality is prevented from deteriorating, even when there are a large number of apparatuses coupled to the communication lines.

Furthermore, in the air-conditioning related system, for example, when refrigerant control, centralized control, or the like is performed, mutual communication is performed between a plurality of apparatuses, and therefore such a network structure is required that it is possible to access necessary data from a desired apparatus. Since the HD-PLC communication method makes it possible to establish cooperation with IP communication, it is possible to expect that the network structure described above is adopted to the air-conditioning related system when IP communication is performed.

Furthermore, when the HD-PLC communication method is adopted in the air-conditioning related system, it is possible to expect that resistance against an abnormality in communication is improved. In the HD-PLC communication method, a modulation is performed in an OFDM manner, and, under the OFDM modulation method, communication is performed in a multi-carrier manner in a wide frequency band. Therefore, in the air-conditioning related system, even when noise at a certain frequency is mixed, for example, it is possible to expect that communication is maintained in another frequency band. Although the outdoor units 3, the indoor units 5, and the like included in the air-conditioning related system are each equipped with a mechanism that may be a noise source, such as a switching power source or an inverter that drives a compressor, a fan, or the like, it is possible to expect that influence of such noise is reduced.

Furthermore, since a MHz band is used as a communication frequency in the HD-PLC communication method, it is possible to expect, even when a short circuit or the like occurs in a communication line, that an influence of a location of the short circuit occurred is blocked or reduced due to impedance in the communication lines to maintain communication. Thus, for example, even when a short circuit occurs due to a failure of work performed when installing the air-conditioning related system, a small animal biting and damaging a communication line, or the like, it is possible to expect that communication is maintained.

### <Configuration of Coupling Terminal>

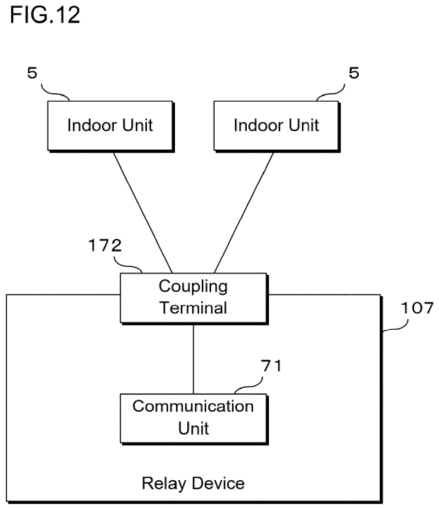

Fig. 12 is a block diagram illustrating another configuration of a relay device. In the configuration of the relay device 7 illustrated in Fig. 6 described above, the relay device 7 includes the two coupling terminals 72 and 73, and the two apparatuses such as the indoor units 5 are individually coupled to the coupling terminals 72 and 73 of the relay device 7 via the transmission lines. On the other hand, a relay device 107 according to a modification example illustrated in Fig. 12 includes one coupling terminal 172. Two apparatuses such as indoor units 5 are both coupled in a shared manner to the one coupling terminal 172 via respective transmission lines.

When the transmission lines coupled to the coupling terminal 172 each include three lines as illustrated in Fig. 7, the coupling terminal 172 may be provided with, for example, three metal terminals to be exposed to outside of the relay device 107. The transmission line having one end coupled to the indoor unit 5 or the like has another end at which internal three wires are separated and exposed, and the three electric wires are fixed to the three metal terminals, respectively. Although the electric wires and the metal terminals may be fixed using a method, that is, screwed or soldered, for example, any fixing method may be adopted.

Note that, when a transmission line coupled to the coupling terminal 172 includes two lines as illustrated in Fig. 11, the coupling terminal 172 may be provided with two metal terminals to be exposed to outside of the relay device 107, for example.

Furthermore, although, in this example, the two transmission lines are coupled to the one coupling terminal 172 in a shared manner, the configuration is not limited to the example, and three or more transmission lines may be coupled in a shared manner to the one coupling terminal 172. Furthermore, although, in this example, the configuration of the coupling terminal 172 of the relay device 107 has been described, the present invention is not limited to the example, and an identical or similar configuration may be adopted for the coupling terminals of the centralized management device 1, the outdoor units 3, and the indoor units 5.

### <Supplying Electric Power>

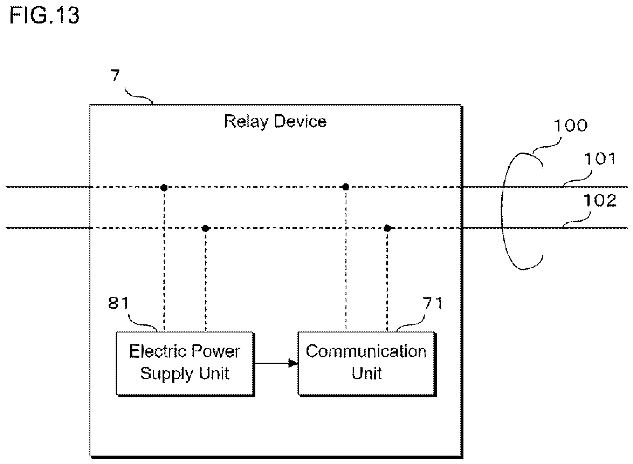

Fig. 13 is a schematic diagram for explaining an example of supplying electric power to a relay device 7. A transmission line 100 in which two signal lines 101 and 102 are bundled is coupled to a relay device 7 illustrated in Fig. 13. The relay device 7 includes a communication unit 71 and an electric power supply unit 81 respectively coupled to both the signal lines 101 and 102 in the transmission line 100.

The electric power supply unit 81 acquires electric power supplied from another apparatus via the transmission line 100, converts the electric power into a direct-current (DC) voltage suitable for various types of electric circuits such as the communication unit 71 included in the relay device 7, and supplies the direct-current voltage. When electric power supplied through the transmission line 100 is alternating-current (AC) electric power, the electric power supply unit 81 may have a function of converting the AC electric power into DC electric power. The electric power supply unit 81 may include, for example, a circuit, an IC, or the like serving as a DC/DC converter or an AC/DC converter, for example.

The communication unit 71 receives DC electric power supplied from the electric power supply unit 81 to operate. The communication unit 71 receives and transmits a signal on the transmission line 100, that is, performs multi-hopping communication to relay communication between at least two apparatuses coupled via the transmission line 100. Furthermore, the communication unit 71 is provided with a filter circuit or the like that separates electric power and a communication signal transmitted via the transmission line 100.

Note that, although not illustrated, when the transmission line 90 in which three electric wires that are the power source line 91, the signal line 92, and the shared line 93 are bundled is used to allow electric power to be transmitted and received via the power source line 91, the electric power supply unit 81 is coupled to the power source line 91 and the shared line 93, and the communication unit 71 is coupled to the signal line 92 and the shared line 93. The electric power supply unit 81 acquires electric power supplied via the power source line 91, and supplies the electric power to the communication unit 71 and the like.

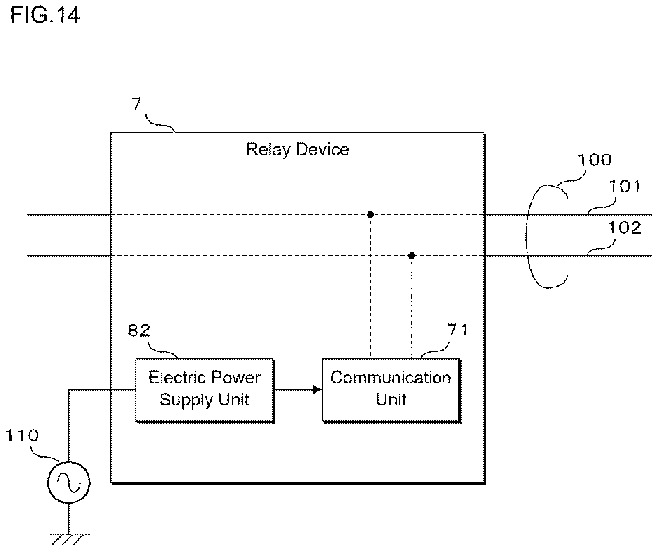

Fig. 14 is a schematic diagram for explaining another example of supplying electric power to a relay device 7. A transmission line 100 in which two electric wires that are a signal line 101 and a shared line 102 are bundled is coupled to the relay device 7 illustrated in Fig. 14. Note that, in this example, supplying of electric power via the signal line 101 is not performed. The relay device 7 includes a communication unit 71 coupled to the signal line 101 and the shared line 102 in the transmission line 100 and an electric power supply unit 82 that acquires electric power from outside and supplies the electric power to the communication unit 71 and the like.

The electric power supply unit 82 is coupled to a power source 110 provided outside the relay device 7 via an electric power supply line such as a power cord. The power source 110 is, for example, a commercial AC power supply, and the electric power supply unit 82 converts AC electric power supplied from the power source 110 into DC electric power and supplies the converted DC electric power to the communication unit 71 and the like.

Note that, although, in this example, the configuration of supplying electric power to the relay device 7 has been described, the configuration is not limited to the example, and an identical or similar configuration may be adopted for supplying electric power to the centralized management device 1, the outdoor units 3, and the indoor units 5.

### <Combined Use of Communication at Low Frequency>

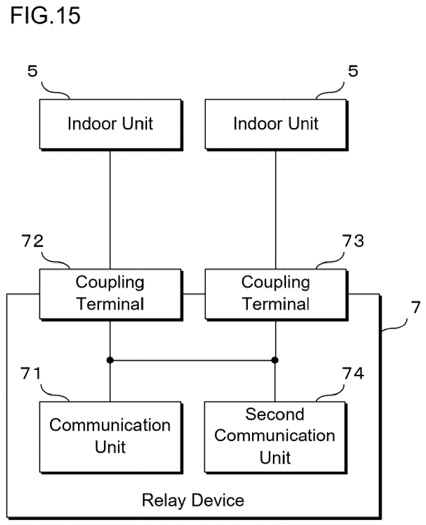

Fig. 15 is a block diagram illustrating another configuration of a relay device 7. The relay device 7 illustrated in Fig. 15 includes a (first) communication unit 71 that has a modulation function based on the OFDM method and a multi-hopping function and that performs communication using the HD-PLC communication method, and a second communication unit 74 that performs communication using a signal at a lower frequency than a frequency of a signal that the communication unit 71 uses.

Both the communication unit 71 and the second communication unit 75 are coupled to signal lines included in transmission lines, which couple the relay device 7 and other apparatuses such as indoor units 5. The communication unit 71 utilizes a frequency band ranging from 2 to 28 MHz, for example, for the signal line to perform communication. On the other hand, the second communication unit 74 utilizes a frequency band at or below 2 MHz, for example, to perform communication. Note that the communication unit 71 and the second communication unit 74 may each include a filter circuit or the like for separating a signal within the frequency band that the unit itself uses for communication from the signal lines.

Note that, although not illustrated, each of the apparatuses such as the centralized management device 1, the outdoor units 3, and the indoor units 5 included in the air-conditioning related system also includes the second communication unit 74 that performs communication at a low frequency. When the plurality of apparatuses included in the air-conditioning related system each perform communication at a high frequency under the HD-PLC communication method, the apparatuses share identification information such as a network ID, and identify a network to which the apparatus itself belongs. Each of the apparatuses utilizes communication at a low frequency, which the second communication unit 74 performs, when transmitting and receiving identification information.

One of the apparatuses included in the air-conditioning related system, such as the centralized management device 1, serves as a master of communication and generates identification information. An apparatus such as an outdoor unit 3, an indoor unit 5, or a relay device 7 newly coupled to the network for communication in the air-conditioning related system first performs communication at a low frequency, which the second communication unit 74 performs, with the centralized management device 1 serving as the master, acquires identification information generated by the master through the communication at the low frequency, and stores the acquired identification information in the storage unit or the like. The apparatus that has acquired the identification information transmits, for example, data including the identification information in a header or the like through communication at a high frequency, which the communication unit 71 performs under the HD-PLC communication method. An apparatus that has received the data extracts the identification information included in the header or the like of the data and compares the extracted identification information with identification information that the apparatus itself has stored, thereby making it possible to determine whether or not the data corresponds to data that is able to be transmitted and received in the network to which the apparatus itself belongs.

In the communication at a high frequency under the HD-PLC communication method, and when transmission lines in different networks are in parallel or are close to each other, for example, a signal may leak from one of the transmission lines to another one of the transmission lines due to crosstalk, possibly leading to confused communication. When a signal has leaked as described above when identification information such as a network ID is transmitted and received through communication at a high frequency, and an apparatus in the air-conditioning related system has acquired identification information that is different from authorized identification information, the apparatus is prevented from performing communication afterwards, making it impossible to correctly construct a network for communication in the air-conditioning related system.

Communication that the second communication unit 74 performs is performed with a signal at a low frequency, where a possibility that the signal leaks due to crosstalk is low. When identification information for a network is transmitted and received through communication at a low frequency, it is possible to expect that the identification information is to be reliably transmitted to and received from an apparatus or the like newly added to the network.

Although the present embodiment has been described, it will be understood that changes in form and detail may be made variously in the present embodiment without departing from the spirit and scope of the claims.

### Reference Signs List

1 CENTRALIZED MANAGEMENT DEVICE
3 OUTDOOR UNIT
5 INDOOR UNIT
7 RELAY DEVICE
11 CONTROL UNIT
12 STORAGE UNIT
13 COMMUNICATION UNIT
14 DISPLAY UNIT
15 OPERATION UNIT
16 COUPLING TERMINAL
31 CONTROL UNIT
32 STORAGE UNIT
33 COMMUNICATION UNIT
34 to 36 COUPLING TERMINAL
51 CONTROL UNIT
52 STORAGE UNIT
53 COMMUNICATION UNIT
54, 55 COUPLING TERMINAL
71 COMMUNICATION UNIT
72, 73 COUPLING TERMINAL
74 SECOND COMMUNICATION UNIT
81 ELECTRIC POWER SUPPLY UNIT
90 TRANSMISSION LINE
91 POWER SOURCE LINE
92 SIGNAL LINE
93 SHARED LINE
100 TRANSMISSION LINE
101 SIGNAL LINE
102 SHARED LINE
107 RELAY DEVICE
110 POWER SOURCE
172 COUPLING TERMINAL

## Claims

1. A relay device provided between a first air-conditioning related apparatus and a second air-conditioning related apparatus, the first air-conditioning related apparatus and the second air-conditioning related apparatus performing multi-hopping communication via a transmission line, the relay device relaying the multi-hopping communication.

2. The relay device according to claim 1, comprising:
a first coupling terminal coupled to a transmission line being coupled to the first air-conditioning related apparatus; and
a second coupling terminal coupled to a transmission line being coupled to the second air-conditioning related apparatus,
wherein the first coupling terminal and the second coupling terminal are electrically connected.

3. The relay device according to claim 1, comprising a coupling terminal coupled to both a transmission line being coupled to the first air-conditioning related apparatus, and a transmission line being coupled to the second air-conditioning related apparatus.

4. The relay device according to any one of claims 1 to 3, comprising an electric power supply unit that supplies, based on electric power supplied via the transmission line, electric power to a communication unit that performs processing related to multi-hopping communication.

5. The relay device according to any one of claims 1 to 3, comprising an electric power supply unit that supplies, based on electric power supplied from a power source outside the relay device via an electric power supply line, electric power to a communication unit that performs processing related to multi-hopping communication.

6. The relay device according to any one of claims 1 to 5, comprising
a first communication unit that performs multi-hopping communication via the transmission line; and
a second communication unit that performs communication via the transmission line at a lower frequency than a frequency at which the first communication unit performs communication.

7. The relay device according to claim 6, wherein the second communication unit performs communication for acquiring, from another apparatus, identification information necessary for the multi-hopping communication that the first communication unit performs.

8. An air-conditioning related system comprising
a first air-conditioning related apparatus and a second air-conditioning related apparatus, the first air-conditioning related apparatus and the second air-conditioning related apparatus performing multi-hopping communication via a transmission line; and
a relay device coupled to the transmission line, the relay device being provided between the first air-conditioning related apparatus and the second air-conditioning related apparatus, the relay device relaying the multi-hopping communication.

9. A communication method comprising:
performing multi-hopping communication via a transmission line by a first air-conditioning related apparatus and a second air-conditioning related apparatus coupled to the transmission line; and
relaying the multi-hopping communication by a relay device coupled to the transmission line, the relay device being provided between the first air-conditioning related apparatus and the second air-conditioning related apparatus.

10. The communication method according to claim 9, wherein the first air-conditioning related apparatus, the second air-conditioning related apparatus, and the relay device
receive a signal that another apparatus has transmitted via the transmission line; and
transmit the signal to the transmission line when the received signal satisfies a predetermined condition.

11. The communication method according to claim 9 or 10, wherein
the transmission line includes at least two signal lines, and
the first air-conditioning related apparatus, the second air-conditioning related apparatus, and the relay device perform communication in conformance with a communication standard for power line communication via the signal lines.

12. The communication method according to claim 9 or 10, wherein
the transmission line includes at least three lines that are a power source line, a shared line, and a signal line, and
the first air-conditioning related apparatus, the second air-conditioning related apparatus, and the relay device perform communication in conformance with a communication standard for power line communication via the signal line.

13. The communication method according to any one of claims 9 to 12, wherein a length of a transmission line coupling the first air-conditioning related apparatus and the relay device and a length of a transmission line coupling the second air-conditioning related apparatus and the relay device are each 350 meters or shorter.

14. The communication method according to claim 13, wherein the length of the transmission line coupling the first air-conditioning related apparatus and the relay device and the length of the transmission line coupling the second air-conditioning related apparatus and the relay device are each 200 meters or shorter.
